# EUROPEAN PATENT SPECIFICATION

(11) **EP 4 227 785 B1**
(45) Date of publication and mention of the grant of the patent: **02.09.2026**
(21) Application number: 21894067.4
(22) Date of filing: 22.11.2021
(51) Int. Cl.: G06F 3/0481, G06F 3/04817, G06F 3/0488

(54) **CONTROL BLURRING METHOD AND APPARATUS, TERMINAL DEVICE, AND READABLE STORAGE MEDIUM**
STEUERUNGSUNSCHÄRFEVERFAHREN UND -VORRICHTUNG, ENDGERÄTEVORRICHTUNG UND LESBARES SPEICHERMEDIUM
PROCÉDÉ ET APPAREIL DE FLOUTAGE DE COMMANDE, DISPOSITIF TERMINAL ET SUPPORT DE STOCKAGE LISIBLE

(30) Priority: 23.11.2020 CN 202011326712; 30.11.2020 CN 202011386556; 30.11.2020 CN 202011386560; 28.12.2020 CN 202011595573
(43) Date of publication of application: 16.08.2023
(73) Proprietor: Huawei Technologies Co., Ltd., Shenzhen, Guangdong 518129 (CN)
(72) Inventor: CHEN, Jian, Shenzhen, Guangdong 518129 (CN); CUI, Kun, Shenzhen, Guangdong 518129 (CN); WANG, Liang, Shenzhen, Guangdong 518129 (CN); WANG, Yonglang, Shenzhen, Guangdong 518129 (CN); HUANG, Ran, Shenzhen, Guangdong 518129 (CN); CHEN, Yuheng, Shenzhen, Guangdong 518129 (CN); WANG, Chen, Shenzhen, Guangdong 518129 (CN); ZHANG, Chen, Shenzhen, Guangdong 518129 (CN); LI, Yu, Shenzhen, Guangdong 518129 (CN); LIU, Chao, Shenzhen, Guangdong 518129 (CN); ZHI, Qucheng, Shenzhen, Guangdong 518129 (CN)
(74) Representative: Epping - Hermann - Fischer
(86) International application number: PCT/CN2021/132150
(87) International publication number: WO 2022/105920

(56) References cited:
- AU-A1- 2013 206 601
- CN-A- 103 593 155
- CN-A- 104 010 212
- CN-A- 107 832 103
- US-A1- 2016 370 864
- US-A1- 2017 011 494
- US-A1- 2017 278 276

## Description

### TECHNICAL FIELD

This application relates to the terminal field, and in particular, to a control blurring method and apparatus, a terminal device, and a readable storage medium.

### BACKGROUND

In a terminal device, it is common to display a control by using an animation effect. When the control is displayed, a background of the control is usually blurred. For example, a background screenshot of a position of the control is blurred and then is used as the background of the control.

According to the existing technologies, a blurring parameter and a frame image that is generated through drawing and rendering are separately obtained in a composition process, and then blurring processing is performed, based on the blurring parameter, on the frame image that is generated through drawing and rendering. Finally, an obtained image is used as a background of a control for composition display.

However, sometimes the composition process may obtain a wrong blurring parameter, and therefore a wrong blurring parameter is used for a frame image on which blurring processing is being performed. This causes a poor effect of composition display.

US 2017/278276 A1 discloses techniques to facilitate realistic real-time motion blur of a primitive. The techniques can calculate a first movement of a primitive, blur texture space data based on the first movement, cache the blurred texture space data, and re-use the blurred texture space data when later movement of the primitive calculated at a later time is found to be similar to the first movement The techniques can re-blur the texture space data to generate second blurred texture space data, store second blurred texture space data, and use the second blurred texture space data to generate blurred primitives if the later movement differs by a threshold amount from the first movement.

US 2016/370864 A1 relates to an electronic device and a method of controlling the same to efficiently perform multitasking through multiple windows by displaying a floating window having predetermined transparency such that the floating window overlaps with at least part of the multiple windows while the multiple windows are displayed.

### SUMMARY

Embodiments of this application provide a control blurring method and apparatus, a terminal device, and a readable storage medium, to resolve a problem that a displayed frame has a wrong blurred background because in a current period, a blurring parameter of a current frame is transmitted to a composition phase while the composition phase does not receive the current frame, and the blurring parameter is used for a wrong frame. The invention is defined in the claims. In the following, parts of the description and drawings referring to embodiments which are not covered by the claims are not presented as embodiments of the invention, but as examples useful for understanding the invention.

According to a first aspect, an embodiment of this application provides a control blurring method, including: obtaining a dynamic parameter of a first control in a first frame image during drawing of the first frame image; encapsulating a drawing result and the dynamic parameter of the first frame image; performing composition on the drawing result of the first frame image based on the dynamic parameter, to obtain a composition result having a blur effect of the first frame image, where the dynamic parameter and the drawing result of the first frame image are obtained from a result of the encapsulation; and performing display based on the composition result of the first frame image.

The control blurring method according to the first aspect may be applied to a terminal device such as a mobile phone, a tablet computer, a wearable device, an in-vehicle device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal device is not limited in embodiments of this application.

The dynamic parameter is a part of a blurring parameter, and may be used for blurring processing. The first frame image may be a current frame image on which drawing and rendering are being performed in a drawing and rendering process. The first control is a control marked for blurring.

It should be noted that, when the control blurring method provided in this application is applied, two or more processes may be included. For example, a drawing and rendering process for drawing and rendering and a composition thread for blurring composition may be included. The dynamic parameter of the first control in the first frame image is obtained in the drawing and rendering process. The drawing result and the dynamic parameter of the first frame image are encapsulated. The result of the encapsulation is transferred to the composition thread. The dynamic parameter and the drawing result of the first frame image are obtained from the result of the encapsulation in the composition thread. Composition is performed on the drawing result of the first frame image based on the dynamic parameter.

In the first aspect, the drawing result and the dynamic parameter of the first frame image are encapsulated. Composition is performed based on the result of the encapsulation, to obtain the composition result having the blur effect of the first frame image. Display is performed based on the composition result of the first frame image. After the drawing result and the dynamic parameter of the first frame image are encapsulated, the drawing result and the dynamic parameter of the first frame image are parameters associated with each other. When encapsulation is performed based on the dynamic parameter, composition is performed based on the drawing result of the first frame image. In this case, the dynamic parameter is not used for a wrong frame image, and it can be ensured that a correct dynamic parameter is used for the frame image for composition.

In some implementations, the first frame image may include at least one control. In the at least one control, a control whose control property includes a blurring tag is the first control, and the blurring tag is used to indicate to perform blurring on the first control.

In some other implementations, the first frame image may include at least one control. A control property of the at least one control includes a blurring tag. When the blurring tag is true, the control is the first control. The blurring tag is used to indicate to perform blurring on the first control.

For example, it may be determined whetherthe blurring tag is true based on a tag value of the blurring tag. For example, if the tag value is 1, it is determined that the blurring tag is true; or if the tag value is 0, it is determined that the blurring tag is false. When the blurring tag is false, the control does not need to be blurred.

In some implementations, the dynamic parameter is a parameter that is of the first control and that changes over time. The dynamic parameter includes one or more of coordinates, a size, a radius of a rounded corner, and transparency of the control.

In some implementations, before performing composition based on the result of the encapsulation, to obtain the composition result having the blur effect of the first frame image, the method further includes: obtaining a static parameter of the first control in the first frame image, where the static parameter includes a blur type and a blur strength.

The performing composition based on the result of the encapsulation, to obtain the composition result having the blur effect of the first frame image includes: performing composition based on the result of the encapsulation and the static parameter, to obtain the composition result having the blur effect of the first frame image.

In some implementations, the performing composition based on the result of the encapsulation and the static parameter, to obtain the composition result having the blur effect of the first frame image includes: obtaining the drawing result and the dynamic parameter of the first frame image based on the result of the encapsulation; determining, based on the dynamic parameter, an area corresponding to the first control in the drawing result of the first frame image; performing, based on the static parameter, blurring processing on the area corresponding to the first control in the drawing result of the first frame image, to obtain a blurred area image; and performing composition based on the drawing result of the first frame image and the blurred area image, to obtain the composition result having the blur effect of the first frame image.

In some implementations, the obtaining a dynamic parameter of a first control in a first frame image includes: obtaining the dynamic parameter of the first control according to a drawing instruction for drawing the first frame image.

In some implementations, the encapsulating a drawing result and the dynamic parameter of the first frame image includes: storing the drawing result and the dynamic parameter of the first frame image that are associated with each other, to obtain the result of the encapsulation.

In some implementations, the drawing result of the first frame image includes drawing results of one or more layers, where a drawing result of each layer is drawn based on one or more controls at the layer, and the layer includes memory space used to store the drawing result and layer information.

According to a second aspect, an embodiment of this application provides a control blurring apparatus. The apparatus includes: an obtaining module, configured to obtain a dynamic parameter of a first control in a first frame image during drawing of the first frame image; an encapsulation module, configured to encapsulate a drawing result and the dynamic parameter of the first frame image; a composition module, configured to perform composition based on a result of the encapsulation, to obtain a composition result having a blur effect of the first frame image; and a display module, configured to perform display based on the composition result of the first frame image.

In some implementations, the first frame image may include at least one control. In the at least one control, a control whose control property includes a blurring tag is the first control, and the blurring tag is used to indicate to perform blurring on the first control.

In some other implementations, the first frame image may include at least one control. A control property of the at least one control includes a blurring tag. When the blurring tag is true, the control is the first control. The blurring tag is used to indicate to perform blurring on the first control.

In some implementations, the dynamic parameter is a parameter that is of the first control and that changes over time. The dynamic parameter includes one or more of coordinates, a size, a radius of a rounded corner, and transparency of the control.

In some implementations, the obtaining module is further configured to obtain a static parameter of the first control in the first frame image, where the static parameter includes a blur type and a blur strength.

The composition module is specifically configured to perform composition based on the result of the encapsulation and the static parameter, to obtain the composition result having the blur effect of the first frame image.

In some implementations, the composition module is specifically configured to obtain the drawing result and dynamic parameter of the first frame image based on the result of the encapsulation; determine, based on the dynamic parameter, an area corresponding to the first control in the drawing result of the first frame image; perform, based on the static parameter, blurring processing on the area corresponding to the first control in the drawing result of the first frame image, to obtain a blurred area image; and perform composition based on the drawing result of the first frame image and the blurred area image, to obtain the composition result having the blur effect of the first frame image.

In some implementations, the obtaining module is specifically configured to obtain the dynamic parameter of the first control according to a drawing instruction for drawing the first frame image.

In some implementations, the encapsulation module is specifically configured to store the drawing result and the dynamic parameter of the first frame image that are associated with each other, to obtain the result of the encapsulation. In some implementations, the drawing result of the first frame image includes drawing results of one or more layers, where a drawing result of each layer is drawn based on one or more controls at the layer, and the layer includes memory space used to store the drawing result and layer information.

According to a third aspect, an embodiment of this application provides a terminal device, including: at least one processor, a memory, and a computer program that is stored in the memory and that can be run on the at least one processor. The processor executes the computer program, to implement the method according to the first aspect.

According to a fourth aspect, an embodiment of this application provides a computer-readable storage medium. The computer-readable storage medium stores a computer program. When a processor executes the computer program, the method according to the first aspect is implemented.

According to a fifth aspect, an embodiment of this application provides a computer program product. When the computer program product is run on a terminal device, the terminal device is enabled to perform the method according to the first aspect.

According to a sixth aspect, an embodiment of this application provides a chip system. The chip system includes a memory and a processor. The processor executes a computer program stored in the memory, to implement the method according to the first aspect.

According to a seventh aspect, an embodiment of this application provides a chip system. The chip system includes a processor. The processor is coupled to the computer-readable storage medium provided in the fourth aspect. The processor executes a computer program stored in the computer-readable storage medium, to implement the method according to the first aspect.

It may be understood that, for beneficial effects of the second aspect to the seventh aspect, refer to related descriptions in the first aspect. Details are not described herein again.

### BRIEF DESCRIPTION OF DRAWINGS

FIG. 1 is a schematic diagram of a structure of a terminal device according to an embodiment of this application;
FIG. 2 is a diagram of a system architecture of a terminal device according to an embodiment of this application;
FIG. 3 is a timing diagram of applying a control blurring method according to an embodiment of this application;
FIG. 4 is a schematic flowchart of a control blurring method according to an embodiment of this application;
FIG. 5 is a schematic diagram of an application scenario of a control blurring method according to an embodiment of this application;
FIG. 6 is a schematic diagram of an application scenario of another control blurring method according to an embodiment of this application;
FIG. 7 is a schematic diagram of an application scenario of another control blurring method according to an embodiment of this application;
FIG. 8 is a schematic diagram of a control interface image in a control blurring method according to an embodiment of this application;
FIG. 9 is a schematic flowchart of another control blurring method according to an embodiment of this application;
FIG. 10 is a schematic diagram of an application scenario of another control blurring method according to an embodiment of this application;
FIG. 11 is a schematic diagram of an application scenario of another control blurring method according to an embodiment of this application;
FIG. 12 is a schematic diagram of an application scenario of another control blurring method according to an embodiment of this application;
FIG. 13 is a schematic diagram of an application scenario of another method according to an embodiment of this application;
FIG. 14 is a schematic diagram of a structure of a control blurring apparatus according to an embodiment of this application;
FIG. 15 is a schematic diagram of a structure of another terminal device according to an embodiment of this application;

### DESCRIPTION OF EMBODIMENTS

In the following descriptions, for description instead of limitation, specific details such as a particular system structure and a technology are provided to facilitate a thorough understanding of embodiments of this application. However, a person skilled in the art should know that this application may also be implemented in other embodiments without these specific details. In other cases, detailed descriptions of well-known systems, apparatuses, circuits, and methods are omitted, so that this application is described without being obscured by unnecessary details.

It should be further understood that the term "and/or" used in the specification and the appended claims indicates any combination and all possible combinations of one or more items listed in association, and includes the combinations. As used in the specification and the appended claims, the term "if" may be interpreted as "when", "once", "in response to determining", or "in response to detecting" depending on the context. Similarly, the phrase "if it is determined" or "if the [described condition or event] is detected" may be interpreted as "once determined", "in response to determining", "once the [described condition or event] is detected", or "in response to detecting the [described condition or event]" depending on the context.

In addition, in the descriptions of the specification and appended claims, the terms "first", "second", "third", and the like are merely used for differentiation and description, but shall not be understood as an indication or an implication of relative importance.

Reference to "an embodiment", "some embodiments", or the like described in the specification of this application indicates that one or more embodiments of this application include a specific feature, structure, or characteristic described with reference to the embodiments. Therefore, statements in this specification, such as "in an embodiment", "in some embodiments", "in some other embodiments", and "in other embodiments", that appear at different places do not necessarily mean a same embodiment. Instead, the statements mean "one or more but not all of the embodiments", unless otherwise specifically emphasized. Terms "include", "contain", "have", and variants of the terms all mean "include but are not limited to", unless otherwise specifically emphasized.

In this application, control blurring refers to performing blurring processing on a background image of a control.

The applicant finds that, currently, control blurring is implemented by using a three-level pipeline including a rendering and drawing phase, a composition phase, and a display phase. For example, a composition result of a frame image of a control with a blurred background is obtained through drawing and composition at the rendering and drawing phase and the composition phase, and is displayed at the display phase. The rendering and drawing phase refers to a phase at which processing is performed by a rendering and drawing process. The composition phase refers to a phase at which processing is performed by a composition process. The display phase refers to a phase at which a composition result of a frame image including a control with a blurred background is transferred for display.

When a control is displayed, a control animation is often used. Therefore, when a background of the control is blurred, a background image of the control changes in each frame of the animation. Consequently, a blurring parameter for blurring the control background also changes over time.

A current frame image may be separately drawn on one or more layers. For example, one or more layers may be first drawn by using the drawing and rendering process, to obtain a drawing result of each layer (that is, a part of the current frame image). A drawing result of each layer may include one or more controls.

If a control included in a layer includes a blurring tag, the control in the layer is a to-be-blurred control, and the layer is a to-be-blurred layer.

A layer is a unit for drawing an image, and memory space corresponding to the layer may be used to store a drawing result and layer information. The layer information may include layer property information such as a color gamut space, a layer position, a layer identifier, a layer size, and a layer resolution. The layer information may further include other layer-related information, for example, may further include a blurring tag, a blurring parameter, and the like.

In some system architectures, one application may correspond to at least one layer. For example, in an Android system, an application includes at least one activity component (activity). The activity is a visualized application component, and one activity may correspond to one layer. For example, an activity can be displayed in a form of a key, text, or check box.

Layer drawing is to draw control content that is provided by an application and that corresponds to the layer in a memory corresponding to the layer, to obtain a drawing result corresponding to the layer. Layer composition is to overlay drawing results of one or more layers corresponding to a frame image according to a layer sequence to obtain a composition result. The composition result can be used to display a frame image on a screen.

A drawing result of a first frame image includes drawing results of one or more layers corresponding to the first frame image. For example, if the first frame image includes one or more applications, and each application includes at least one activity, the drawing result of the first frame image includes a drawing result of each activity on a corresponding layer.

The layer sequence refers to a sequence of one or more first layers arranged in a direction perpendicular to a screen. The layer sequence can be specified by an application when creating layers, and the layer sequence can be stored in a composer (surfaceflinger).

After the drawing result of each layer is obtained at the rendering and drawing phase, the drawing result and a blurring parameter of each layer are transferred to the composition process. Then the composition phase starts. At the composition phase, the composition process invokes the GPU to perform blurring processing on the to-be-blurred layer based on the blurring parameter. Then all layers are composed to obtain a composition result of the current frame image. Finally, the composition result of the current frame image is transmitted to a display device, and is displayed at the display phase.

The blurring processing algorithm may include one of blur algorithms such as Gaussian blur, motion blur, radial blur, and lens blur.

In this application, Gaussian blur is used as an example of blurring processing. A Gaussian blur calculation process is convolving an image based on normal distribution. An image after the Gaussian blur has a visual effect similar to that of observing an image through ground glass.

In a process of drawing each layer at the drawing and rendering phase, if drawing is not completed in one period, a drawing result for each layer of the current frame image cannot be transferred to the composition phase in a current period. However, in the current period, a blurring parameter of the current frame image is transferred to the composition phase, but the drawing result of the layer corresponding to the current frame image is not received at the composition phase. In this case, the blurring parameter is used for a wrong frame image. As a result, a frame image displayed at the display phase uses a wrong blurred background. Therefore, visible frame freezing or frame skipping occurs. Therefore, this application provides a control blurring method, including: obtaining a dynamic parameter of a first control in a first frame image during drawing of the first frame image; encapsulating a drawing result and a dynamic parameter of the first frame image; performing composition based on a result of the encapsulation, to obtain a composition result having a blur effect of the first frame image; and performing display based on the composition result of the first frame image.

After the drawing result and the dynamic parameter of the first frame image are encapsulated, the drawing result and the dynamic parameter of the first frame image are parameters associated with each other. When encapsulation is performed based on the dynamic parameter, composition is performed based on the drawing result of the first frame image. In this case, the dynamic parameter is not used for a wrong frame image, and it can be ensured that a correct dynamic parameter is used for the frame image for composition. This avoids visible frame freezing or frame skipping, and improves user experience of a blur effect.

The control blurring method provided in embodiments of this application may be applied to a terminal device such as a mobile phone, a tablet computer, a wearable device, an in-vehicle device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal device is not limited in embodiments of this application.

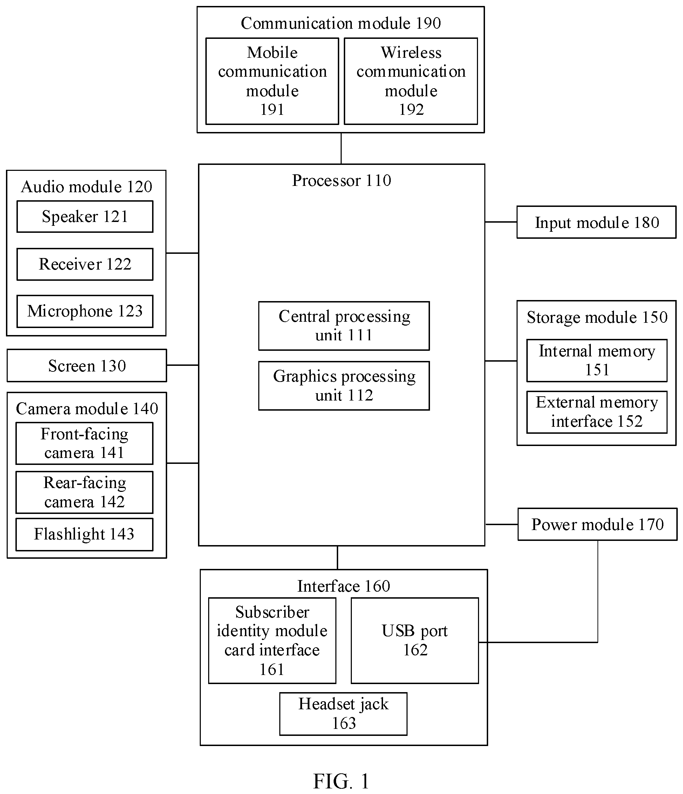

For example, the terminal device is a mobile phone in descriptions herein. As shown in FIG. 1, the terminal device may include components such as a processor 110, an audio module 120, a screen 130, a camera module 140, a storage module 150, an interface 160, a power module 170, an input module 180, and a communication module 190. A person skilled in the art may understand that the structure of the terminal device shown in FIG. 1 does not constitute a limitation on the terminal device. The terminal device may include more or fewer components than those shown in the figure, or may include a combination of some components, or may include different component arrangements.

The following describes each component and module of the terminal device in detail with reference to FIG. 1.

The processor 110 is a control center of the terminal device, and the processor 110 may include a CPU 111 and a graphics processing unit (Graphics Processing Unit, GPU) 112. The CPU 110 is connected to all parts of the terminal device by using various interfaces and lines, and performs various functions of the terminal device and data processing by running or executing a software program and/or a module stored in the storage module 150 and by invoking data stored in the storage module 150. The GPU 112 is a microprocessor that can perform calculation operations related to images and graphics. The GPU 112 may be in a plurality of forms. For example, the GPU 112 may be disposed in a display adapter, or integrated into the CPU 111, or may be an independent GPU chip.

When drawing and rendering an image and a graphic, the GPU draws or renders the image or the graphic and stores the image or the graphic in a buffer (buffer). For a GPU disposed in a display adapter, a buffer is a video memory (also referred to as a frame buffer) integrated in the display adapter. For a GPU integrated in the CPU or a GPU in a form of an independent GPU chip, the buffer may be a part of a running memory of the terminal device, for example, a part of space in a random access memory (Random Access Memory, RAM).

In some implementations, the CPU 111 may include one or more processing units. For example, the CPU 111 may be a general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, discrete gate or transistor logic device, discrete hardware component, or the like.

In some other implementations, a modem processor may further be integrated into the processor 110. The modem processor mainly processes data related to wireless communication. This is not limited in this application.

The audio module 120 is configured to process an audio signal. For example, the audio module 120 may convert an analog audio signal received by a microphone 123 into digital audio data and send the digital audio data to the processor 110. Alternatively, the digital audio data sent by the processor 110 is converted into an analog signal that can be played by the speaker 121 and the receiver 122, and the analog signals are sent to the speaker 121 or the receiver 122.

The screen 130 is configured to display, through visual output, content output by the terminal device. For example, the screen 130 can display information entered by a user, information provided for a user, a system interface of the terminal device, and an interface of an application run on the terminal device. A material of a display panel of the screen 130 may be a liquid crystal display (Liquid Crystal Display, LCD), a thin film transistor (Thin Film Transistor, TFT), a light-emitting diode (Light-Emitting Diode, LED), an organic light-emitting diode (Organic Light-Emitting Diode, OLED), or the like. This is not limited herein.

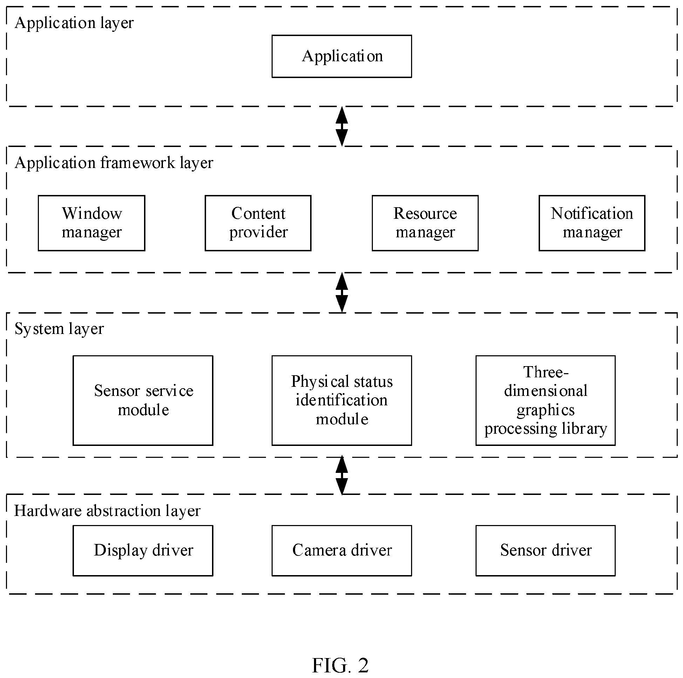

In some implementations, the display panel of the screen may further be covered with a touch panel. When detecting a touch operation on or near the touch panel, the touch panel transmits the touch operation to the processor 110 to determine a type of the touch event, and then the processor 110 provides corresponding visual output on the display panel based on the type of the touch event. In FIG. 2, the screen and the touch panel (which are not shown) are used as two independent components to implement input and input functions of the mobile phone. However, in some embodiments, the touch panel and the display panel may be integrated to implement the input and output functions of the mobile phone.

The camera module 140 includes at least one camera, and the camera may be a front-facing camera 141 or a rear-facing camera 142.

This is merely an example. The terminal device may have one lens, two lenses, three lenses, or four lenses. For example, when there are four lenses, one is a front-facing lens 141, and the other three lenses are rear-facing lenses 142. The three rear-facing lenses 142 may be lenses with different focal lengths. For example, a primary lens with an equivalent focal length of 35 mm, a wide-angle lens with an equivalent focal length of 20 mm, and a long-focus lens with an equivalent focal length of 105 mm. This is not limited in embodiments of this application.

It should be noted that, when the terminal device includes a plurality of lenses, the plurality of lenses may all be front-facing lenses, or may all be rear-facing lenses, or some of the lenses may be front-facing lenses, and the other lenses may be rear-facing lenses. This is not limited in this embodiment of this application.

The storage module 150 may include an internal memory 151 and an external memory interface 152. The internal memory 151 may be a flash memory, a hard disk drive, a memory for computing. For example, the internal memory may include at least one hard disk drive or flash memory and one memory for computing. The external memory interface 152 is configured to connect an external memory, the external memory may include a memory card, a removable hard disk, a USB flash drive, an optical disc, and the like.

The storage module 150 may be configured to store a software program and module. The processor 110 performs various function applications of the terminal device and data processing by running the software program and module that are stored in the storage module 150. The storage module 150 may include a program storage area and a data storage area. The program storage area is usually located on the internal memory 151, and may store an operating system and an application required by at least one function (for example, a sound playing function or a touch response function). The data storage area may be located on the internal memory 151, or on an external memory connected to the external memory interface 152, or on both the internal memory and the external memory. The data storage area may store data (such as audio data, image data, and video data) created when the mobile phone is used, and the like. The interface 160 includes but is not limited to a subscriber identity module (Subscriber Identity Module, SIM) card interface 161, a USB port 162, and a headset port 163. The SIM card interface is used for inserting a SIM card provided by a carrier. In this way, when the terminal device establishes a communication connection with a base station by using a mobile communication module 191, the terminal device performs identification and verifies a user identity. After the user identity is verified, the terminal device sends a call request and a data request to the base station, and receives a call, data, an SMS message, and the like forwarded by the base station.

The USB port 162 may connect the terminal device to a computer by using a USB cable, to exchange data. In addition, the USB port 162 is further connected to a power module 170. When the USB cable is connected to a computer or a charging port, input electric energy may be transmitted to the power module 170 to charge the terminal device. The USB port 162 may be a micro-USB, a mini-USB, a USB Type-c, or the like. This is not limited herein.

The headset port 163 is configured to connect a headset. The headset port 163 may be an independent port. For example, the headset port 163 may be a 3.5 mm headset jack. Alternatively, the headset port 163 may be integrated into the USB port 162. For example, the headset port may be integrated into a USB Type-c. When a headset is plugged into the headset port 163, the audio module 120 may not send an output analog audio signal to the speaker 121 or the receiver 122, but send the output analog audio signal to the headset through the headset port 163. Then the headset plays audio. When the headset is plugged in, if it is detected that the headset does not include a microphone, in this case, the audio module still receives an analog audio signal sent by the microphone 123. If it is detected that the headset includes a microphone, the audio module receives the analog audio signal sent by the microphone of the headset, processes the analog audio signal, and sends the analog audio signal to the processor 110.

The terminal device further includes the power module 170 that supplies power to each part. The power module may include a battery, a power management module, and the like. The power management module is logically connected to the processor 110, so that functions such as charging/discharging management and power consumption management can be implemented by using the power management module.

The input module 180 may be configured to receive input information and a key signal. The input information includes digital or character information, touch information, and the like. The key signal includes a pressing signal of a physical button, a pressing signal of a virtual key, and the like.

In an implementation, the input module 180 may include a touch panel and another input device. The touch panel and the screen 130 may form a touchscreen. The touch panel may collect a touch operation performed by a user on or near the touch panel (such as an operation performed by a user on the touch panel or near the touchscreen by using an object or accessory that can be used to generate a touch signal on the touch panel, such as a finger or a stylus), and drives implementation of a corresponding function according to a preset program. Optionally, the touch panel may include two parts: a touch detection apparatus and a touch controller. The touch detection apparatus detects a touch position of a user, detects a signal generated by a touch operation, and transmits the signal to the touch controller. The touch controller receives touch information from the touch detection apparatus, converts the touch information into touch point coordinates, and then sends the touch point coordinates to the processor 110. The processor 110 receives the sent touch point coordinates, coverts the touch point coordinates into a touch instruction, and executes the instruction. The touch panel may be of a resistive type, a capacitive type, an infrared type, a surface acoustic wave type, or the like. The another input device may include but is not limited to one or more of a physical keyboard, a functional button (such as a volume control button or a power button), a trackball, a mouse, and a joystick.

The communication module 190 includes the mobile communication module 191 and a wireless communication module 192. The mobile communication module 191 supports any communication standard or protocol, including but not limited to a global system for mobile communication (Global System for Mobile communication, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), time-division WCDMA (Time-Division WCDMA, TD-WCDMA), time-division LTE (Time-Division LTE, TD-LTE), the 5^{th} generation New Radio (the 5^{th} generation New Radio, 5G NR), and the like. The wireless communication module 192 supports Bluetooth (Bluetooth), Wireless Fidelity (Wireless Fidelity, Wi-Fi), near field communication (Near Field Communication, NFC), and the like.

The mobile communication module 191 may be configured to connect to a communication base station by using an antenna, to establish a call link between the terminal device and another terminal device, and send and receive call audio. The wireless communication module 192 is configured to wirelessly connect to an external device. The external device may be an external device that has sound playing and receiving functions, such as a Bluetooth headset or a Bluetooth stereo, or may be an external device that is used for input, such as a Bluetooth mouse or a Bluetooth keyboard. This is not limited herein.

FIG. 2 is a schematic diagram of a software structure of a terminal device according to an embodiment of this application. An example in which the terminal device is a mobile phone and an operating system is an Android system is used for description.

In some embodiments, the Android system may be divided into four layers: an application (APP) layer, an application framework (framework, FWK) layer, a system layer, and a hardware abstraction layer. The layers communicate with each other by using a software interface.

As shown in FIG. 2, the application layer may include a series of application packages, and the application packages may include applications such as Messages, Calendar, Camera, Videos, Navigation, Gallery, and Calls.

The application framework layer provides an application programming interface (application programming interface, API) and a programming framework for an application at the application layer. The application framework layer may include some predefined functions, such as a function for receiving an event sent by the application framework layer. As shown in FIG. 2, the application framework layer may include a window manager, a resource manager, a notification manager, and the like.

The window manager is configured to manage a window program. The window manager may obtain a size of the display screen, determine whether there is a status bar, perform screen locking, take a screenshot, and the like. The content provider is configured to: store and obtain data, and make the data accessible to an application. The data may include a video, an image, audio, calls that are made and received, a browsing history and bookmarks, an address book, and the like.

The resource manager provides various resources such as a localized character string, an icon, an image, a layout file, and a video file for an application.

The notification manager enables an application to display notification information in a status bar, and may be used to convey a message of a notification type. The message may automatically disappear after a short stay without user interaction. For example, the notification manager is configured to notify download completion, give a message notification, and the like. The notification manager may alternatively be a notification that appears in a top status bar of a system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The application framework layer may further include:
a view system (not shown), including visual controls such as a control for displaying a text and a control for displaying a picture, where the view system may be configured to construct an application, and a display interface may include one or more views, for example, a display interface including an SMS message notification icon may include a text display view and an image display view; and
a phone manager (not shown), configured to provide a communication function of a mobile phone 100, for example, management of a call status (including answering, declining, or the like).

The system layer may include a plurality of functional modules, for example, a sensor service module, a physical status identification module, and a three-dimensional graphics processing library (for example, OpenGL ES).

The sensor service module is configured to monitor sensor data uploaded by various types of sensors at a hardware layer, to determine a physical status of the mobile phone. The physical status identification module is configured to analyze and identify a user gesture, a face, and the like. The three-dimensional graphics processing library is configured to implement three-dimensional graphics drawing, image rendering, composition, layer processing, and the like.

The system layer may further include: a surface manager (not shown) configured to manage a display subsystem and provide fusion of 2D and 3D layers for a plurality of applications; and a media library (not shown) supporting playing and recording in a plurality of commonly used audio and video formats, and static image files. The media library supports a plurality of audio, video, and image coding formats, such as MPEG4, H.264, MP3, AAC, AMR, JPG, and PNG.

The hardware abstraction layer is a layer between hardware and software. The hardware abstraction layer may include a display driver, a camera driver, a sensor driver, and the like, and is configured to drive related hardware, for example, a display screen, a camera, and a sensor, at the hardware layer.

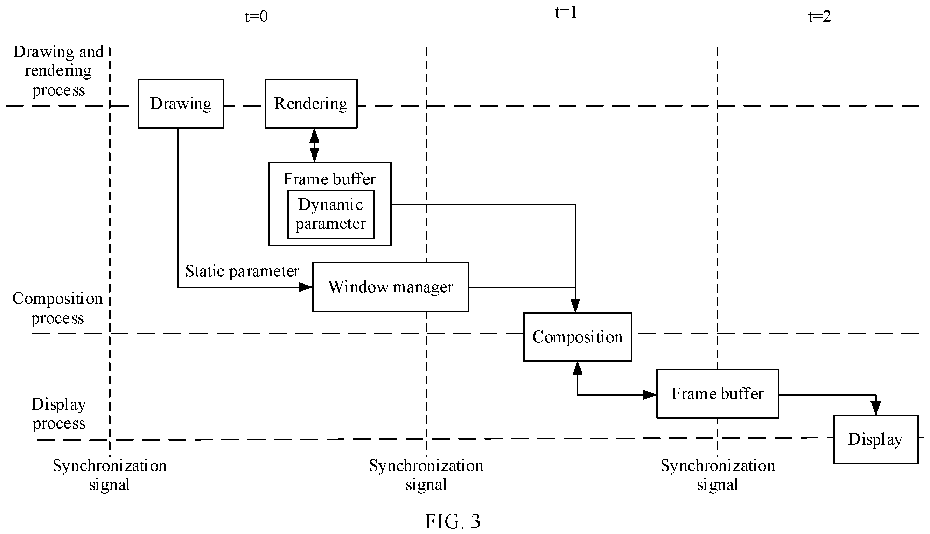

FIG. 3 is a timing diagram of applying a control blurring method according to an embodiment of this application. Refer to FIG. 3. Drawing and rendering, composition, and display of a first frame image requires at least three periods. Duration between two synchronization signals is one period. Duration of the period may depend on a screen refresh rate. For example, if a screen refresh rate is 60 Hz, duration of each period is 1/60 second, that is, about 16.667 milliseconds. Graphics processing unit composition is implemented by using a GPU in a composition process, and may be used for blurring composition.

In the first period (t=0), a drawing and rendering process obtains a static parameter and a dynamic parameter according to a drawing instruction of the first frame image, and performs drawing and rendering on a drawing result of the first frame image. Then the drawing and rendering process transfers the static parameter to a composition process through a window manager. At the same time, the dynamic parameter and the drawing result of the first frame image are encapsulated and stored in a frame buffer.

In the second period (t=1), the composition process fetches the result of the encapsulation from the frame buffer, and obtains the dynamic parameter and the drawing result of the first frame image. Then, blurring composition is performed on the first frame image in the frame buffer based on the received static parameter and the obtained dynamic parameter, to obtain a composition result of the first frame image with a blur effect.

In the third period (t=2), a display process performs display, on the screen, based on the composition result having the blur effect of the first frame image in the frame buffer.

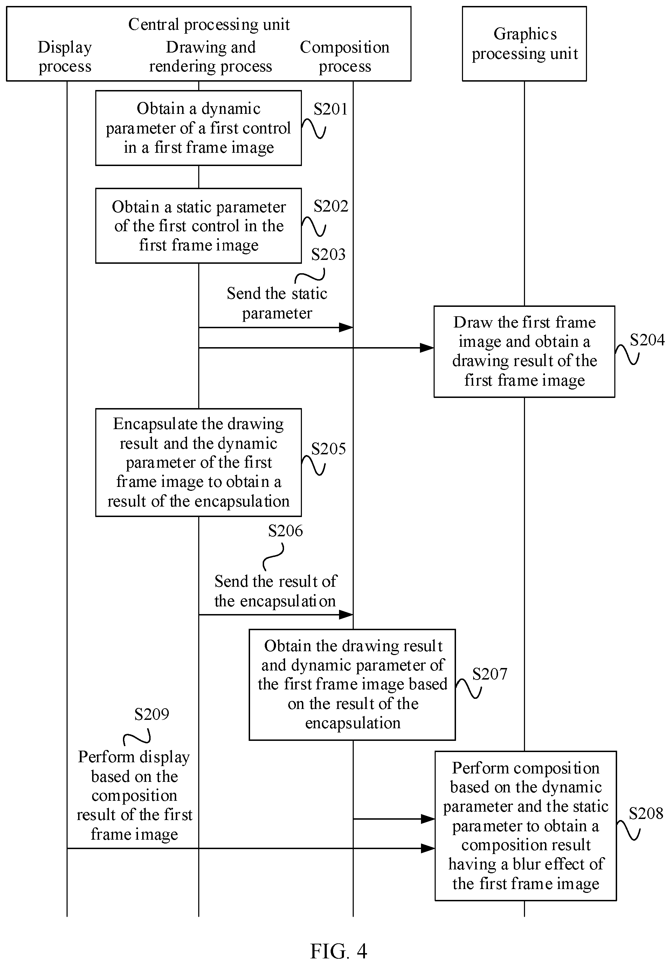

The following further describes, by using a schematic flowchart of a control blurring method shown in FIG. 4, the control blurring method provided in this application. By way of example and not limitation, the method may be applied to the foregoing terminal device.

Refer to FIG. 4. The method includes the following steps.

S201: Obtain a dynamic parameter of a first control in a first frame image.

S202: Obtain a static parameter of the first control in the first frame image.

In some implementations, refer to FIG. 4. S201 and S202 may be performed in a drawing and rendering process. The drawing and rendering process may obtain a drawing instruction of the first frame image, and draw and render the first frame image in a layer according to the drawing instruction. The first frame image may be a frame image of a current frame in a control animation.

The drawing instruction includes drawing content and a blurring parameter of the drawing content. The drawing content is determined based on a control and an application interface that are included in the first frame image. For example, if the control is a notification control, and the application interface is an interface of a home screen, the drawing content includes interface drawing of the notification control and interface drawing of the home screen.

The blurring parameter can be classified into a dynamic parameter and a static parameter. The dynamic parameter may include a parameter in each frame that describes a change of a control. For example, the dynamic parameter may include one or more of parameters that change over time, such as whether a control is blurred, coordinates, a size, a corner radius, and transparency of a control. The static parameter may be used to indicate a blur effect parameter when blurring processing is performed on all frames. For example, the static parameter may include one or more of a layer sequence, a blur type, or a blur strength used for overlaying of the drawing results of the first frame image.

The blur type may be Gaussian blur, radial blur, lens blur, or the like. Each blur type corresponds to a blur strength. For example, a blur strength of Gaussian blur may be represented by using a blur radius (with pixel being a unit).

In some implementations, the first frame image may include one or more controls. In the one or more controls, a control marked as a to-be-blurred control is the first control. Whether a control is to be blurred may be marked in a control property, or may be marked in a dynamic parameter. This is not limited in this application.

It should be noted that, because a first frame image of each frame needs a drawing instruction for drawing, the dynamic parameter may be determined based on the drawing instruction of the first frame image. The determined dynamic parameter is a dynamic parameter used when blurring processing is performed on a current frame image.

Because the control is usually displayed as an animation, a location and size of the control in the first frame image at every moment change over time.

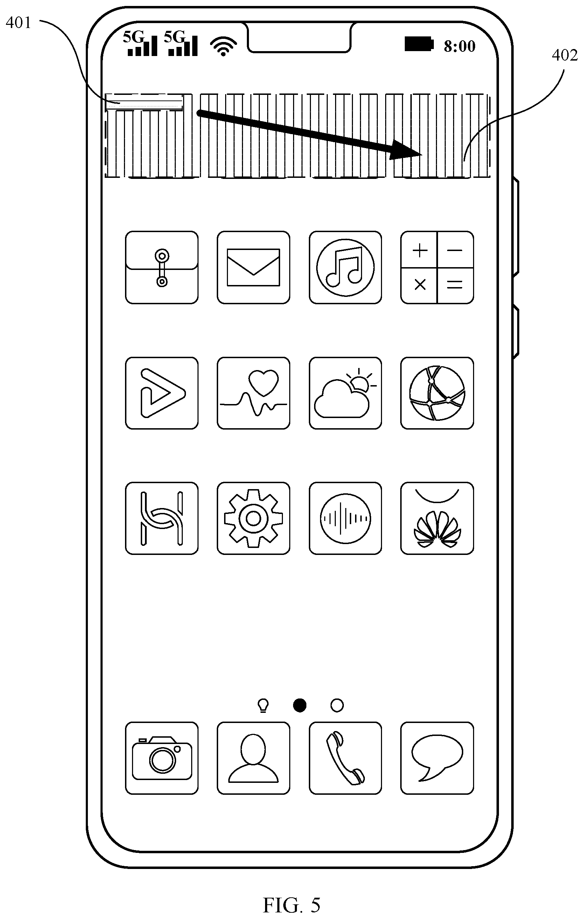

As an example, FIG. 5 to FIG. 7 show several possible implementations.

It is assumed that play time of a control animation is 0.5 second and a frame rate of the control animation is 60 frames per second (Frames Per Second, fps). An animation effect of the entire control consists of 30 frames.

Refer to FIG. 5. An effect of the control animation may be enlarging and extending the animation from a first area 401 to a second area 402. A control changes in a frame image at each moment. In other words, each frame image corresponds to one dynamic parameter. For example, refer to a control animation shown in FIG. 5. In the control animation, coordinates of an upper-left vertex of a control in the first frame are the same as coordinates of an upper-left vertex of the control in the last frame, and a control size is expanded from a size of the first area 401 to a size of the second area 402.

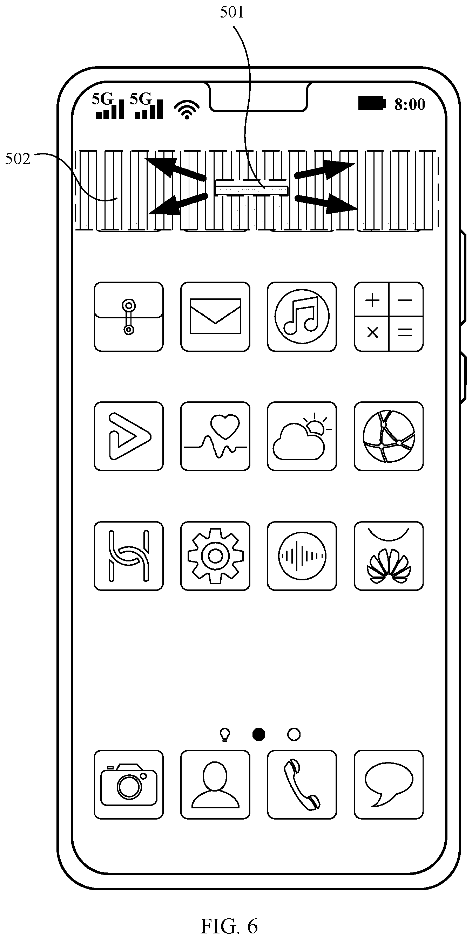

For another example, refer to a control animation shown in FIG. 6. In the control animation, coordinates of a center of a control in the first frame are the same as coordinates of a center of the control in the last frame, and a control size is expanded from a size of a third area 501 to a size of a fourth area 502.

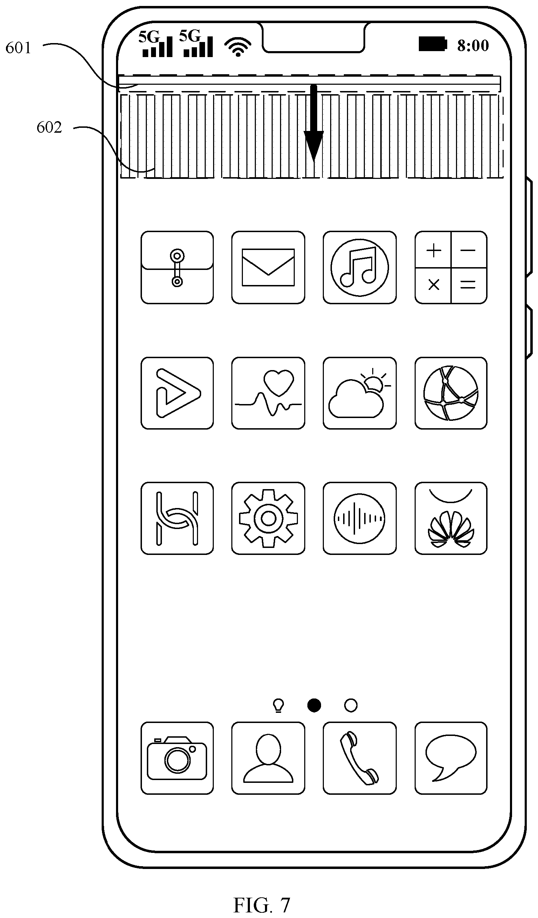

Refer to a control animation shown in FIG. 7. In another implementation, a control in a first frame is in a fifth area 601, and the control moves downward and expands until the control fills a sixth area 602. During this process, the coordinates and the size of the control change accordingly.

S203: Send the static parameter to a composition process in the drawing and rendering process.

In some implementations, the composition process may be an emboss (surfaceflinger) process. When the static parameter is sent to the composition process by using the drawing and rendering process, binder (Binder) communication may be performed. Binder communication involves a client (Client) process (that is, a composition process) that uses a service, a server (Server) process providing a service (that is, a drawing and rendering process), a service manager (ServiceManager) process, and a binder driver. The binder driver determines the server process and the client process by using the ServiceManage, and then directly creates a binder communication channel between the server process and the client process. The binder communication channel is created by using the binder driver. The client process accesses a service or data in the server process by using the binder driver, to implement interprocess data transmission.

S204: Invoke a graphics processing unit by using the drawing and rendering process, to draw the first frame image and obtain a drawing result of the first frame image.

In some implementations, the drawing result of the first frame image includes drawing results of one or more layers, and a drawing result of each layer is drawn based on one or more controls at the layer.

When drawing the first frame image, the graphics processing unit needs to first obtain the drawing instruction of the first frame image, where the drawing instruction instructs to draw applications and/or controls included in the first frame image. Then, a corresponding application interface or control interface (that is, the drawing result) is drawn in a plurality of layers according to the drawing instruction. Memory space occupied by the layer (that is, a frame buffer) may be memory space that is applied for from a system and that is created when an application invokes a control. The memory space may be located in a video memory built in the GPU, or a part of space in a running memory of a terminal device may be used as the frame buffer. There may be a plurality of frame buffers, and space of each frame buffer may be adjusted based on a control type. This is not limited herein.

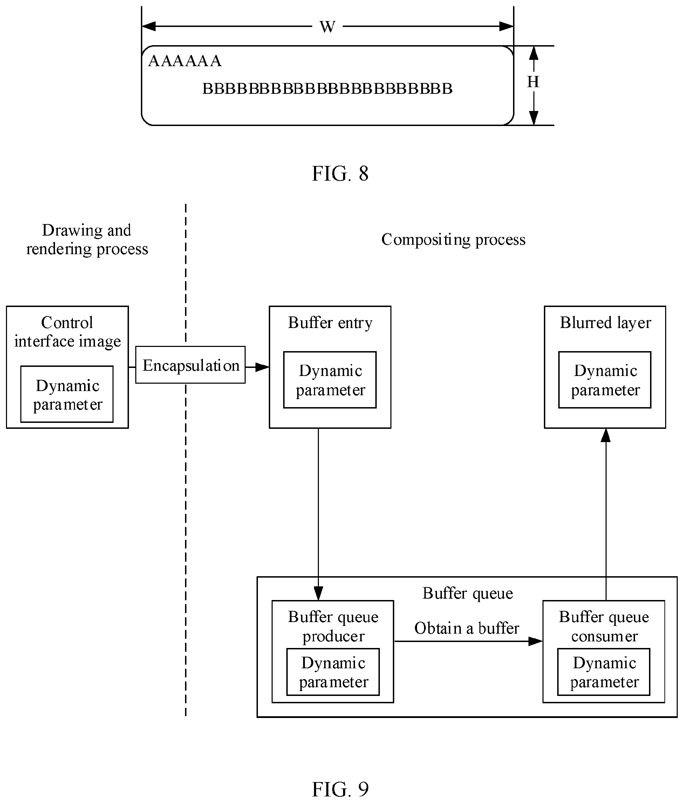

As an example, for a drawing result of a current frame image, refer to FIG. 8. FIG. 8 shows a control interface image of a notification control. Refer to the examples in FIG. 5 to FIG. 7. The interface image of the control may be the last frame in the control animation. The interface image includes notification content "AAAA" and "BBBBBBBBBBBBBBBBBBBBBB". A width of the control is W, and a height of the control is H.

S205: Encapsulate the drawing result and the dynamic parameter of the first frame image to obtain a result of the encapsulation.

It should be noted that encapsulation may refer to storing the drawing result of the first frame image and the dynamic parameter of the first frame image that are associated with each other, so that the drawing result of the first frame image and the dynamic parameter of the first frame image can be processed together during composition. Specifically, for example, the drawing result of the first frame image and the dynamic parameter of the first frame image may be stored in a same memory unit. Alternatively, the drawing result of the first frame image may be associated with the dynamic parameter of the first frame image by using a pointer.

In some implementations, the result of the encapsulation may be stored in a frame buffer. The frame buffer includes a property information storage area and a data storage area. The property information storage area may include a size, a location, and a plurality of identifiers of the buffer. The data storage area is used to store the drawing result of the first frame of image. When the result of the encapsulation is stored in a frame buffer corresponding to the current frame, the dynamic parameter may be stored in a property information storage area, and the drawing result of the first frame image is stored in the data storage area. Alternatively, after the dynamic parameter is associated with the drawing result of the first frame image by using a pointer, the dynamic parameter and the drawing result may be stored together in the data storage area.

S206: Send the result of the encapsulation to the composition process by using the drawing and rendering process.

In some implementations, an identifier of the frame buffer storing the result of the encapsulation may be sent to the composition process, and the composition process fetches the result of the encapsulation in the frame buffer. In this way, the result of the encapsulation is sent to the composition process.

The drawing and rendering process may send the identifier of the frame buffer to the composition process through binder communication. For a specific implementation, refer to S203. Details are not described herein again.

S207: Obtain, in the composition process, the drawing result and the dynamic parameter of the first frame image based on the result of the encapsulation.

As an example, FIG. 9 shows a method for storing a result of encapsulation in a frame buffer, and obtaining a drawing result and a dynamic parameter of a first frame image in a composition process. The method shown in FIG. 9 may be used to implement the process described in FIG. 3 in which the drawing result and the dynamic parameter of the first frame image are encapsulated and stored into the frame buffer in the drawing and rendering process, and then the drawing result and the dynamic parameter of the first frame image are obtained in composition process.

The drawing result and the dynamic parameter of the first frame image may be first encapsulated in the drawing and rendering process, and stored in the frame buffer to generate a buffer entry.

A buffer queue producer (Buffer Queue Producer) in the composition process uses a queue buffer instruction to use the buffer entry as a buffer in a buffer queue (Buffer Queue). A buffer queue consumer (Buffer Queue Consumer) obtains, based on the received identifier of the buffer entry, the drawing result and the dynamic parameter of the first frame image from the buffer entry corresponding to the first frame image. Finally, composition processing is performed at a blurred layer based on the drawing result and the dynamic parameter of the first frame image, where the blurred layer may be stored in the frame buffer. The composition process may perform blurring composition on the first frame image at the blurred layer based on the received static parameter and the obtained dynamic parameter, to obtain a composition result having a blur effect of the first frame image.

S208: By invoking the graphics processing unit in a composition process, perform composition based on the dynamic parameter and the static parameter to obtain a composition result having the blur effect of the first frame image.

In some implementations, the dynamic parameter includes coordinates, a size, and a corner radius of a control. The static parameter includes a layer sequence for overlaying of drawing results of the first frame image, and a blur type and blur strength that are for blurring processing.

When composition is performed based on the drawing result of the first frame image, the dynamic parameter, and the static parameter, an area that needs to be blurred in the drawing result of the first frame image may be first determined based on the dynamic parameter. Because a control background is to be blurred, an area that needs to be blurred may be an area corresponding to the first control.

A layer sequence for overlaying of the drawing results of the first frame image is obtained based on the static parameter, to determine to-be-blurred background layer. Then the to-be-blurred image that is the same as the area corresponding to the first control is obtained from the background layer based on the area corresponding to the first control. Then blurring processing is performed on the to-be-blurred image based on the blur type and the blur strength in the static parameters to obtain a blurred background of the control. Finally, the drawing result of the first frame image and the blurred background are used for overlaying and are composed to obtain the composition result having the blur effect of the first frame image.

As an example, FIG. 8 and FIG. 10 to FIG. 12 show a scenario in which composition is performed based on the dynamic parameter, the static parameter, and the drawing result of the first frame image.

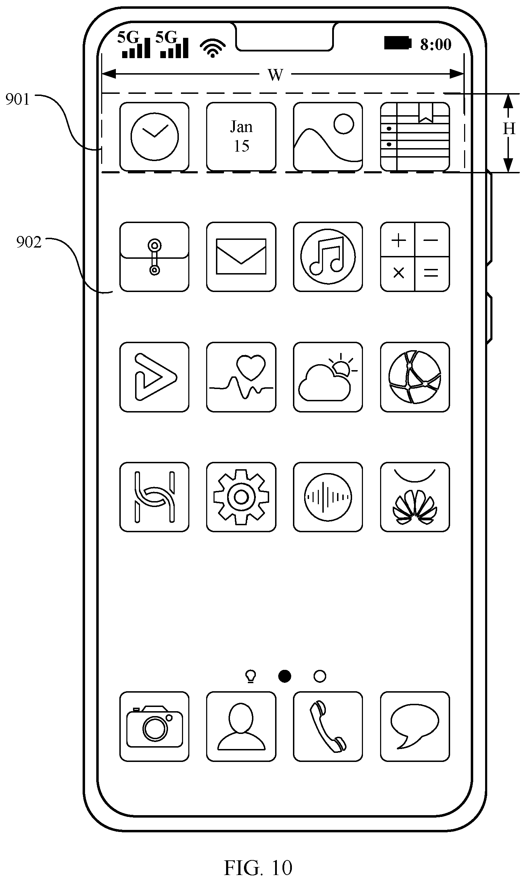

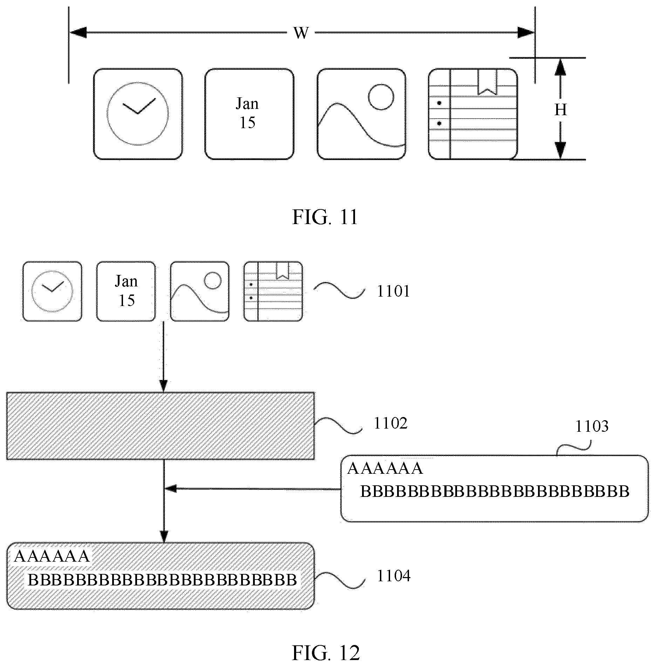

Refer to FIG. 10. A background layer 902 is determined as a to-be-blurred background layer based on a layer sequence for overlaying of the drawing results of the first frame image. An area 901 corresponding to a first control at the background layer 902 is determined based on the coordinates, the size, and the corner radius of a control in the drawing result of the first frame image in FIG. 8. An area that is at the background layer 902 and that is the same as the area 901 corresponding to the first control is captured, to obtain a to-be-blurred image shown in FIG. 11.

Refer to FIG. 12. Blurring processing is first performed on a to-be-blurred image 1101 based on a blur type and a blur strength, to obtain a blurred background 1102 of the control. As an example, the blur type may be Gaussian blur, and the blur strength may be 15-pixel-radius blur.

Finally, the drawing result 1103 of the first frame image and the blurred background 1102 of the control are composed to obtain a composition result 1104 having the blur effect of the first frame image.

S209: Perform display based on the composition result of the first frame image in the composition process.

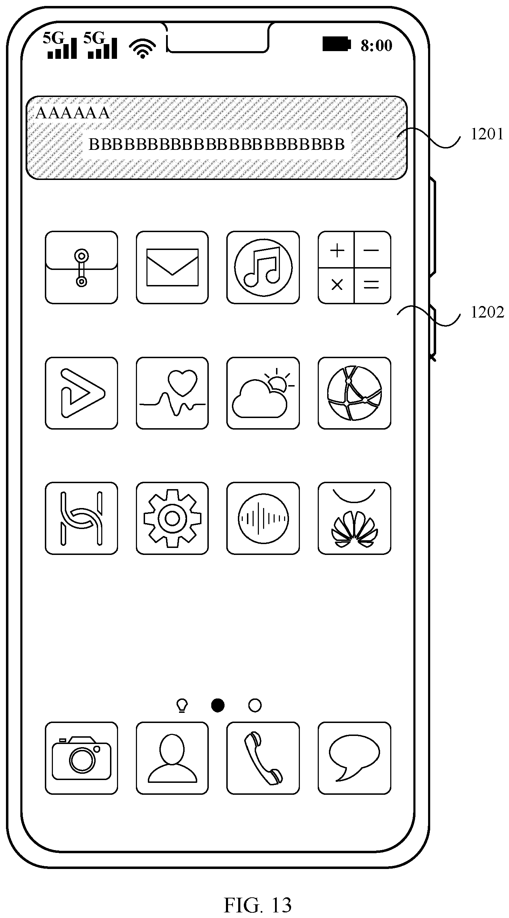

Refer to FIG. 13. For example, a screen of a mobile phone in FIG. 13 displays the composition result having the blur effect of the first frame image. An interface 1201 of a control having a blur effect is displayed in the area corresponding to the first control, and a remaining area is a background interface 1202.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

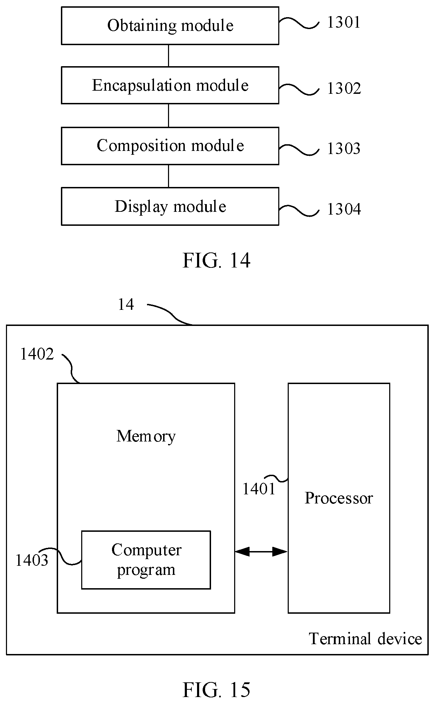

Corresponding to the control blurring method in the foregoing embodiment, FIG. 14 is a block diagram of a structure of a control blurring apparatus according to an embodiment of this application. For ease of description, only parts related to embodiments of this application are shown.

Refer to FIG. 14. The apparatus includes: an obtaining module 1301, configured to obtain a dynamic parameter of a first control in a first frame image during drawing of the first frame image;
an encapsulation module 1302, configured to encapsulate a drawing result and the dynamic parameter of the first frame image;
a composition module 1303, configured to compose the drawing result of the first frame image based on the dynamic parameter, to obtain a composition result having a blur effect of the first frame image, where the dynamic parameter and the drawing result of the first frame image are obtained from a result of the encapsulation; and
a display module 1304, configured to perform display based on the composition result of the first frame image.

In some implementations, the first frame image may include at least one control. In the at least one control, a control whose control property includes a blurring tag is the first control, and the blurring tag is used to indicate to perform blurring processing on the first control.

In some other implementations, the first frame image may include at least one control. A control property of the at least one control includes a blurring tag. When the blurring tag is true, the control is the first control. The blurring tag is used to indicate to perform blurring processing on the first control.

In some implementations, the dynamic parameter is a parameter that is of the first control and that changes over time. The dynamic parameter includes one or more of coordinates, a size, a corner radius, and transparency of the control. In some implementations, the obtaining module 1301 is further configured to obtain a static parameter of the first control in the first frame image, where the static parameter includes a blur type and a blur strength.

The composition module 1303 is specifically configured to perform composition based on the result of the encapsulation and the static parameter to obtain a composition result having the blur effect of the first frame image.

In some implementations, the composition module 1303 is specifically configured to obtain the drawing result and dynamic parameter of the first frame image based on the result of the encapsulation; determine, based on the dynamic parameter, an area corresponding to the first control in the drawing result of the first frame image; perform, based on the static parameter, blurring processing on the area corresponding to the first control in the drawing result of the first frame image, to obtain a blurred area image; and perform composition based on the drawing result and the blurred area image of the first frame image, to obtain the composition result having the blur effect of the first frame image. In some implementations, the obtaining module 1301 is specifically configured to obtain the dynamic parameter of the first control according to a drawing instruction for drawing the first frame image.

In some implementations, the encapsulation module 1302 is specifically configured to store the drawing result and the dynamic parameter of the first frame image that are associated with each other, to obtain the result of the encapsulation.

In some implementations, the drawing result of the first frame image includes drawing results of one or more layers, where a drawing result of each layer is drawn based on one or more controls at the layer, and the layer includes memory space used to store the drawing result and layer information.

It should be noted that content such as information exchange between the foregoing modules and an execution process is based on a same concept as that in the method embodiments of this application. For specific functions and technical effects of the content, refer to the method embodiments. Details are not described herein again.

It may be clearly understood by a person skilled in the art that, for convenient and brief description, division into the foregoing functional units and modules is merely used as an example for description. In actual application, the foregoing functions can be allocated to different functional units and modules for implementation according to a requirement, that is, an inner structure of the apparatus is divided into different functional units or modules to implement all or some of the functions described above. The functional units or modules in the embodiment may be integrated into one processing unit, or each of the units may exist alone physically, or two or more units may be integrated into one unit. The integrated unit may be implemented in a form of hardware, or may be implemented in a form of a software functional unit. In addition, specific names of the functional units and modules are merely for distinguishing between the functional units and modules, but are not intended to limit the protection scope of this application. For a specific working process of the units or modules in the foregoing system, refer to a corresponding process in the foregoing method embodiment. Details are not described herein again.

FIG. 15 is a schematic diagram of a structure of a terminal device according to an embodiment of this application. As shown in FIG. 15, a terminal device 15 in this embodiment includes: at least one processor 1401 (only one processor is shown in FIG. 15), a memory 1402, and a computer program 1403 that is stored in the memory 1402 and that can be run on the at least one processor 1401. The processor 1401 executes the computer program 1403 to implement the steps in the foregoing method embodiments.

The terminal device 14 may be a terminal device such as a mobile phone, a desktop computer, a notebook computer, a palmtop computer, or a cloud server. The terminal device may include but is not limited to including the processor 1401 and the memory 1402. A person skilled in the art may understand that FIG. 15 is merely an example of the terminal device 14, and does not constitute a limitation on the terminal device 14. The terminal device may include more or fewer components than those shown in the figure, or some components may be combined, or different components may be used. For example, the terminal device may further include an input/output device, a network access device, or the like.

The processor 1401 may be a central processing unit (Central Processing Unit, CPU). The processor 1401 may alternatively be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate or a transistor logic device, or a discrete hardware component. The general-purpose processor may be a microprocessor, or the processor may be any conventional processor or the like.

In some embodiments, the memory 1402 may be an internal storage unit of the terminal device 14, for example, a hard disk drive or an internal memory of the terminal device 14. In some other embodiments, the memory 1402 may alternatively be an external storage device of the terminal device 14, for example, a swappable hard disk, a smart media card (Smart Media Card, SMC), a secure digital (Secure Digital, SD) card, a flash card (Flash Card), or the like that is provided on the terminal device 14. Further, the memory 1402 may alternatively include both the internal storage unit and the external storage device of the terminal device 14. The memory 1402 is configured to store an operating system, an application, a boot loader (Boot Loader), data, another program, and the like, for example, program code of a computer program. The memory 1402 may further be configured to temporarily store data that has been output or is to be output.

An embodiment of this application further provides a computer-readable storage medium. The computer-readable storage medium stores a computer program. When a processor executes the computer program, the steps in the foregoing method embodiments can be implemented.

An embodiment of this application provides a computer program product. When the computer program product is run on a mobile terminal, the mobile terminal is enabled to implement steps in the foregoing method embodiments.

An embodiment of this application provides a chip system. The chip system includes a memory and a processor. The processor executes a computer program stored in the memory, to implement the steps in the foregoing method embodiments.

An embodiment of this application provides a chip system. The chip system includes a processor. The processor is coupled to the foregoing computer-readable storage medium. The processor executes a computer program stored in the computer-readable storage medium, to implement the steps in the foregoing method embodiments.

When the integrated unit is implemented in a form of a software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When a processor executes the computer program, steps in the foregoing method embodiments can be implemented. The computer program includes computer program code. The computer program code may be in a source code form, an object code form, an executable file form, some intermediate forms, or the like. The computer-readable medium may include at least any entity or apparatus that can carry the computer program code to a terminal device, a recording medium, a computer memory, a read-only memory (Read-Only Memory, ROM), a random access memory (Random Access Memory, RAM), an electrical carrier signal, a telecommunication signal, and a software distribution medium, for example, a USB flash drive, a removable hard disk, a magnetic disk, or an optical disk. In some jurisdictions, the computer-readable medium cannot be the electrical carrier signal or the telecommunication signal according to legislation and patent practices.

In the foregoing embodiments, descriptions of all the embodiments have respective focuses. For a part that is not described in detail in an embodiment, refer to related descriptions in other embodiments.

A person of ordinary skill in the art may be aware that the units and algorithm steps described with reference to the examples in embodiments disclosed in this specification may be implemented by electronic hardware or a combination of computer software and electronic hardware. Whether the functions are performed by hardware or software depends on particular applications and design constraints of the technical solutions.

In embodiments provided in this application, it should be understood that the disclosed method, apparatus, and terminal device may be implemented in other manners.

For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected according to an actual requirement to achieve objectives of the solutions of embodiments.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A control blurring method, wherein the method comprises:
obtaining (S201), in a drawing and rendering phase, a dynamic parameter of a first control in a first frame image during drawing of the first frame image;
obtaining (S204), in the drawing and rendering phase, a drawing result of the first frame image, wherein the drawing result of the first frame image comprises drawing results of one or more layers, a drawing result of each layer is drawn based on one or more controls at the layer, and the layer comprises memory space used to store a drawing result and layer information;
wherein, if a control included in the one or more layers includes a blurring tag, the control in the layer is a to-be-blurred control, and the layer is a to-be-blurred layer;
encapsulating (S205), in the drawing and rendering phase, the drawing result and the dynamic parameter of the first frame image;
performing composition (S208), in a composition phase, on the drawing result of the first frame image based on the dynamic parameter and on overlaying the drawing results of the one or more layers corresponding to the frame image according to a layer sequence, to obtain a composition result having a blur effect of the first frame image, wherein the dynamic parameter and the drawing result of the first frame image are obtained from a result of the encapsulation; and
performing display (S209), in a display phase, based on the composition result of the first frame image.

2. The method according to claim 1, wherein the dynamic parameter is a parameter that is of the first control and that changes over time; and
the dynamic parameter comprises one or more of coordinates, a size, a corner radius, and transparency of the control.

3. The method according to any one of claims 1 to 2, wherein before the performing (S208) composition based on the dynamic parameter, to obtain a composition result having a blur effect of the first frame image, the method further comprises:
obtaining (S202) a static parameter of the first control in the first frame image, wherein the static parameter comprises a blur type and a blur strength; and
the performing (S208) composition based on the dynamic parameter, to obtain a composition result having a blur effect of the first frame image comprises:
performing composition based on the result of the encapsulation and the static parameter, to obtain the composition result having the blur effect of the first frame image.

4. The method according to claim 3, wherein the performing composition based on the result of the encapsulation and the static parameter, to obtain the composition result having the blur effect of the first frame image comprises:
obtaining (S207) the drawing result and the dynamic parameter of the first frame image based on the result of the encapsulation;
determining, based on the dynamic parameter, an area corresponding to the first control in the drawing result of the first frame image;
performing, based on the static parameter, blurring processing on the area corresponding to the first control in the drawing result of the first frame image, to obtain a blurred area image; and
performing composition based on the drawing result of the first frame image and the blurred area image, to obtain the composition result having the blur effect of the first frame image.

5. The method according to any one of claims 1 to 4, wherein the obtaining (S201) a dynamic parameter of a first control in a first frame image comprises:
obtaining the dynamic parameter of the first control according to a drawing instruction for drawing the first frame image.

6. The method according to any one of claims 1 to 5, wherein the encapsulating (S205) a drawing result and the dynamic parameter of the first frame image comprises:
storing the drawing result and the dynamic parameter of the first frame image that are associated with each other, to obtain the result of the encapsulation.

7. A control blurring apparatus, wherein the apparatus comprises:
an obtaining module (1301), configured to obtain, in a drawing and rendering phase a dynamic parameter of a first control in a first frame image during drawing of the first frame image, and a drawing result of the first frame image, wherein the drawing result of the first frame image comprises drawing results of one or more layers, a drawing result of each layer is drawn based on one or more controls at the layer, and the layer comprises memory space used to store a drawing result and layer information;
wherein, if a control included in the one or more layers includes a blurring tag, the control in the layer is a to-be-blurred control, and the layer is a to-be-blurred layer;
an encapsulation module (1302), configured to encapsulate, in the drawing and rendering phase, a drawing result and the dynamic parameter of the first frame image;
a composition module (1303), configured to perform composition, in a composition phase, based on a result of the encapsulation and on overlaying the drawing results of the one or more layers corresponding to the frame image according to a layer sequence, to obtain a composition result having a blur effect of the first frame image; and
a display module (1304), configured to perform display, in a display phase, based on the composition result of the first frame image.

8. The apparatus according to claim 7, wherein the dynamic parameter is a parameter that is of the first control and that changes over time; and
the dynamic parameter comprises one or more of coordinates, a size, a corner radius, and transparency of the control.

9. A terminal device (14), comprising at least one processor (1401), a memory (1402), and a computer program (1403) that is stored in the memory (1402) and that is run on the at least one processor (1401), wherein when the processor (1401) executes the computer program (1403), the method according to any one of claims 1 to 6 is implemented.

10. A computer-readable storage medium, wherein the computer-readable storage medium stores a computer program, and when a processor executes the computer program, the method according to any one of claims 1 to 6 is implemented.

## Patentansprüche

1. Verfahren zum Weichzeichnen von Steuerelementen, wobei das Verfahren Folgendes umfasst:
Erhalten (S201), in einer Zeichnungs- und Rendering-Phase, eines dynamischen Parameters eines ersten Steuerelements in einem ersten Einzelbild während des Zeichnens des ersten Einzelbilds;
Erhalten (S204), in der Zeichnungs- und Rendering-Phase, eines Zeichnungsergebnisses des ersten Einzelbilds, wobei das Zeichnungsergebnis des ersten Einzelbilds Zeichnungsergebnisse einer oder mehrerer Schichten umfasst, ein Zeichnungsergebnis jeder Schicht basierend auf einem oder mehreren Steuerelementen auf der Schicht gezeichnet wird und die Schicht Speicherraum umfasst, der verwendet wird, um ein Zeichnungsergebnis und Schichtinformationen zu speichern;
wobei, wenn ein in der einen oder den mehreren Schichten enthaltenes Steuerelement ein Weichzeichnungs-Tag beinhaltet, das Steuerelement in der Schicht ein weichzuzeichnendes Steuerelement ist und die Schicht eine weichzuzeichnende Schicht ist;
Verkapseln (S205), in der Zeichnungs- und Rendering-Phase, des Zeichnungsergebnisses und des dynamischen Parameters des ersten Einzelbilds;
Durchführen einer Zusammensetzung (S208) in einer Zusammensetzungsphase an dem Zeichnungsergebnis des ersten Einzelbilds basierend auf dem dynamischen Parameter und auf einer Überlagerung der Zeichnungsergebnisse der einen oder der mehreren Schichten, die dem Einzelbild entsprechen, gemäß einer Schichtfolge, um ein Zusammensetzungsergebnis mit einem Weichzeichnungseffekt des ersten Einzelbilds zu erhalten, wobei der dynamische Parameter und das Zeichnungsergebnis des ersten Einzelbilds aus einem Ergebnis der Verkapselung erhalten werden; und
Durchführen einer Anzeige (S209) in einer Anzeigephase basierend auf dem Zusammensetzungsergebnis des ersten Einzelbilds.

2. Verfahren nach Anspruch 1, wobei der dynamische Parameter ein Parameter ist, der zu dem ersten Steuerelement gehört und der sich im Zeitverlauf ändert; und
der dynamische Parameter Koordinaten und/oder eine Größe und/oder einen Eckenradius und/oder Transparenz des Steuerelements umfasst.

3. Verfahren nach einem der Ansprüche 1 bis 2, wobei das Verfahren vor dem Durchführen (S208) einer Zusammensetzung basierend auf dem dynamischen Parameter, um ein Zusammensetzungsergebnis mit einem Weichzeichnungseffekt des ersten Einzelbilds zu erhalten, ferner Folgendes umfasst:
Erhalten (S202) eines statischen Parameters des ersten Steuerelements in dem ersten Einzelbild, wobei der statische Parameter einen Weichzeichnungstyp und eine Weichzeichnungsstärke umfasst; und
das Durchführen (S208) einer Zusammensetzung basierend auf dem dynamischen Parameter, um ein Zusammensetzungsergebnis mit einem Weichzeichnungseffekt des ersten Einzelbilds zu erhalten, Folgendes umfasst:
Durchführen einer Zusammensetzung basierend auf dem Ergebnis der Verkapselung und dem statischen Parameter, um das Zusammensetzungsergebnis mit dem Weichzeichnungseffekt des ersten Einzelbilds zu erhalten.

4. Verfahren nach Anspruch 3, wobei das Durchführen einer Zusammensetzung basierend auf dem Ergebnis der Verkapselung und dem statischen Parameter, um das Zusammensetzungsergebnis mit dem Weichzeichnungseffekt des ersten Einzelbilds zu erhalten, Folgendes umfasst:
Erhalten (S207) des Zeichnungsergebnisses und des dynamischen Parameters des ersten Einzelbilds basierend auf dem Ergebnis der Verkapselung;
Bestimmen, basierend auf dem dynamischen Parameter, eines Bereichs, der dem ersten Steuerelement entspricht, in dem Zeichnungsergebnis des ersten Framebilds;
Durchführen, basierend auf dem statischen Parameter, einer Weichzeichnungsverarbeitung an dem Bereich, der dem ersten Steuerelement entspricht, in dem Zeichnungsergebnis des ersten Einzelbilds, um ein Bild eines weichgezeichneten Bereichs zu erhalten; und
Durchführen einer Zusammensetzung basierend auf dem Zeichnungsergebnis des ersten Einzelbilds und dem Bild des weichgezeichneten Bereichs, um das Zusammensetzungsergebnis mit dem Weichzeichnungseffekt des ersten Einzelbilds zu erhalten.

5. Verfahren nach einem der Ansprüche 1 bis 4, wobei das Erhalten (S201) eines dynamischen Parameters eines ersten Steuerelements in einem ersten Einzelbild Folgendes umfasst:
Erhalten des dynamischen Parameters des ersten Steuerelements gemäß einer Zeichnungsanweisung zum Zeichnen des ersten Einzelbilds.

6. Verfahren nach einem der Ansprüche 1 bis 5, wobei das Verkapseln (S205) eines Zeichnungsergebnisses und des dynamischen Parameters des ersten Einzelbilds Folgendes umfasst:
Speichern des Zeichnungsergebnisses und des dynamischen Parameters des ersten Einzelbilds, die miteinander assoziiert sind, um das Ergebnis der Verkapselung zu erhalten.

7. Einrichtung zum Weichzeichnen von Steuerelementen, wobei die Einrichtung Folgendes umfasst:
ein Erhaltemodul (1301), ausgelegt zum Erhalten, in einer Zeichnungs- und Rendering-Phase, eines dynamischen Parameters eines ersten Steuerelements in einem ersten Einzelbild während des Zeichnens des ersten Einzelbilds, und eines Zeichnungsergebnisses des ersten Einzelbilds, wobei das Zeichnungsergebnis des ersten Einzelbilds Zeichnungsergebnisse einer oder mehrerer Schichten umfasst, ein Zeichnungsergebnis jeder Schicht basierend auf einem oder mehreren Steuerelementen auf der Schicht gezeichnet wird und die Schicht Speicherraum umfasst, der verwendet wird, um ein Zeichnungsergebnis und Schichtinformationen zu speichern;
wobei, wenn ein in der einen oder den mehreren Schichten enthaltenes Steuerelement ein Weichzeichnungs-Tag beinhaltet, das Steuerelement in der Schicht ein weichzuzeichnendes Steuerelement ist und die Schicht eine weichzuzeichnende Schicht ist;
ein Verkapselungsmodul (1302), ausgelegt zum Verkapseln, in der Zeichnungs- und Rendering-Phase, eines Zeichnungsergebnisses und des dynamischen Parameters des ersten Einzelbilds;
ein Zusammensetzungsmodul (1303), ausgelegt zum Durchführen einer Zusammensetzung in einer Zusammensetzungsphase basierend auf einem Ergebnis der Verkapselung und auf einer Überlagerung der Zeichnungsergebnisse der einen oder der mehreren Schichten, die dem Einzelbild entsprechen, gemäß einer Schichtfolge, um ein Zusammensetzungsergebnis mit einem Weichzeichnungseffekt des ersten Einzelbilds zu erhalten; und
ein Anzeigemodul (1304), ausgelegt zum Durchführen einer Anzeige in einer Anzeigephase basierend auf dem Zusammensetzungsergebnis des ersten Einzelbilds.

8. Einrichtung nach Anspruch 7, wobei der dynamische Parameter ein Parameter ist, der zu dem ersten Steuerelement gehört und der sich im Zeitverlauf ändert; und
der dynamische Parameter Koordinaten und/oder eine Größe und/oder einen Eckenradius und/oder Transparenz des Steuerelements umfasst.

9. Endgerätevorrichtung (14), die mindestens einen Prozessor (1401), einen Speicher (1402) und ein Computerprogramm (1403) umfasst, das in dem Speicher (1402) gespeichert ist und auf dem mindestens einen Prozessor (1401) ausgeführt wird, wobei, wenn der Prozessor (1401) das Computerprogramm (1403) ausführt, das Verfahren nach einem der Ansprüche 1 bis 6 implementiert wird.

10. Computerlesbares Speichermedium, wobei das computerlesbare Speichermedium ein Computerprogramm speichert, und wenn ein Prozessor das Computerprogramm ausführt, das Verfahren nach einem der Ansprüche 1 bis 6 implementiert wird.

## Revendications

1. Procédé de floutage de contrôle, le procédé comprenant les étapes suivantes :
obtenir (S201), dans une phase de dessin et de rendu, un paramètre dynamique d'un premier contrôle dans une première image de trame lors du dessin de la première image de trame ;
obtenir (S204), dans la phase de dessin et de rendu, un résultat de dessin de la première image de trame, le résultat de dessin de la première image de trame comprenant des résultats de dessin d'une ou plusieurs couches, un résultat de dessin de chaque couche étant dessiné sur la base d'un ou plusieurs contrôles au niveau de la couche, et la couche comprenant un espace de stockage utilisé pour stocker un résultat de dessin et des informations de couche ;
dans lequel, si un contrôle inclus dans les une ou plusieurs couches comprend un marqueur de floutage, le contrôle dans la couche est un contrôle à flouter, et la couche est une couche à flouter ;
encapsuler (S205), dans la phase de dessin et de rendu, le résultat de dessin et le paramètre dynamique de la première image de trame ;
réaliser une composition (S208), dans une phase de composition, sur le résultat de dessin de la première image de trame sur la base du paramètre dynamique et sur la superposition des résultats de dessin des une ou plusieurs couches correspondant à l'image de trame selon une séquence de couches, pour obtenir un résultat de composition ayant un effet de flou de la première image de trame, le paramètre dynamique et le résultat de dessin de la première image de trame étant obtenus à partir d'un résultat de l'encapsulation ; et
réaliser un affichage (S209), dans une phase d'affichage, sur la base du résultat de composition de la première image de trame.

2. Procédé selon la revendication 1, dans lequel le paramètre dynamique est un paramètre qui est du premier contrôle et qui change dans le temps ; et
le paramètre dynamique comprend une ou plusieurs coordonnées, une taille, un rayon de coin, et une transparence du contrôle.

3. Procédé selon l'une quelconque des revendications 1 et 2, dans lequel, avant la réalisation (S208) de la composition sur la base du paramètre dynamique, pour obtenir un résultat de composition ayant un effet de flou de la première image de trame, le procédé comprend en outre l'étape suivante :
obtenir (S202) un paramètre statique du premier contrôle dans la première image de trame, dans lequel le paramètre statique comprend un type de flou et une intensité de flou ; et
la réalisation (S208) d'une composition sur la base du paramètre dynamique, pour obtenir un résultat de composition ayant un effet de flou de la première image de trame comprend l'étape suivante :
réaliser une composition sur la base du résultat de l'encapsulation et du paramètre statique, pour obtenir le résultat de composition ayant l'effet de flou de la première image de trame.

4. Procédé selon la revendication 3, dans lequel la réalisation de la composition sur la base du résultat de l'encapsulation et du paramètre statique, pour obtenir le résultat de composition ayant l'effet de flou de la première image d'image comprend les étapes suivantes :
obtenir (S207) le résultat de dessin et le paramètre dynamique de la première image de trame sur la base du résultat de l'encapsulation ;
déterminer, sur la base du paramètre dynamique, une zone correspondant au premier contrôle dans le résultat de dessin de la première image de trame ;
réaliser, sur la base du paramètre statique, un traitement de floutage sur la zone correspondant au premier contrôle dans le résultat de dessin de la première image de trame, pour obtenir une image de zone floutée ; et
réaliser une composition sur la base du résultat de dessin de la première image de trame et de l'image de zone floutée, pour obtenir le résultat de composition ayant l'effet de flou de la première image de trame.

5. Procédé selon l'une quelconque des revendications 1 à 4, dans lequel l'obtention (S201) d'un paramètre dynamique d'un premier contrôle dans une première image d'image de trame comprend l'étape suivante :
obtenir le paramètre dynamique du premier contrôle conformément à une instruction de dessin pour dessiner la première image de trame.

6. Procédé selon l'une quelconque des revendications 1 à 5, dans lequel l'encapsulation (S205) d'un résultat de dessin et du paramètre dynamique de la première image de trame comprend l'étape suivante :
stocker le résultat de dessin et le paramètre dynamique de la première image de trame qui sont associés l'un à l'autre, pour obtenir le résultat de l'encapsulation.

7. Appareil de floutage de contrôle, l'appareil comprenant :
un module d'obtention (1301), configuré pour obtenir, dans une phase de dessin et de rendu, un paramètre dynamique d'un premier contrôle dans une première image de trame lors du dessin de la première image de trame, et un résultat de dessin de la première image de trame, dans lequel le résultat de dessin de la première image de trame comprend des résultats de dessin d'une ou plusieurs couches, un résultat de dessin de chaque couche étant dessiné sur la base d'un ou de plusieurs contrôles au niveau de la couche, et la couche comprenant un espace de stockage utilisé pour stocker un résultat de dessin et des informations de couche ;
dans lequel, si un contrôle inclus dans les une ou plusieurs couches comprend un marqueur de floutage, le contrôle dans la couche est un contrôle à flouter, et la couche est une couche à flouter ;
un module d'encapsulation (1302), configuré pour encapsuler, dans la phase de dessin et de restitution, un résultat de dessin et le paramètre dynamique de la première image de trame ;
un module de composition (1303), configuré pour réaliser la composition, dans une phase de composition, sur la base d'un résultat de l'encapsulation et sur la superposition des résultats de dessin de la ou des couches correspondant à l'image de trame selon une séquence de couches, pour obtenir un résultat de composition ayant un effet de flou de la première image de trame ; et
un module d'affichage (1304) configuré pour réaliser un affichage, dans une phase d'affichage, sur la base du résultat de composition de la première image de trame.

8. Appareil selon la revendication 7, dans lequel le paramètre dynamique est un paramètre qui est du premier contrôle et qui change dans le temps ; et
le paramètre dynamique comprend une ou plusieurs coordonnées, une taille, un rayon de coin, et une transparence du contrôle.

9. Dispositif terminal (14), comprenant au moins un processeur (1401), une mémoire (1402), et un programme informatique (1403) qui est stocké dans la mémoire (1402) et qui est exécuté sur l'au moins un processeur (1401), dans lequel, lorsque le processeur (1401) exécute le programme informatique (1403), le procédé selon l'une quelconque des revendications 1 à 6 est mis en œuvre.

10. Support de stockage lisible par ordinateur, dans lequel le support de stockage lisible par ordinateur stocke un programme informatique et, lorsqu'un processeur exécute le programme informatique, le procédé selon l'une quelconque des revendications 1 à 6 est mis en œuvre.
